# EUROPEAN PATENT SPECIFICATION

(11) **EP 0 368 600 B1**
(45) Date of publication and mention of the grant of the patent: **07.05.1997**
(21) Application number: 89311490.0
(22) Date of filing: 07.11.1989
(51) Int. Cl.: E01C 11/16

(54) **Reinforcing a paved surface, and reinforcement therefor**
Armiertes Pflaster und seine Bewehrung
Surface pavée et armée et son armature

(30) Priority: 07.11.1988 GB 8825990
(43) Date of publication of application: 16.05.1990
(73) Proprietor: Netlon Limited, Blackburn Lancashire BB2 4PJ (GB)
(72) Inventor: Mercer, Frank Brian, Blackburn Lancashire BB2 6QF (GB); Martin, Keith Fraser, Blackburn Lancashire BB6 9BY (GB); Orr, Brian, Preston Lancashire, PR5 0JE (GB)
(74) Representative: Lyndon-Stanford, Edward Willoughby Brooke

(56) References cited:
- DE-A- 1 459 734
- DE-A- 2 400 769
- DE-A- 3 317 628
- GB-A- 1 209 523
- NL-A- 6 807 089
- NL-A- 7 007 249

## Description

The present invention relates to a mesh structure/fabric laminate comprising a fabric bonded to a plastics material mesh structure having oriented strands connected to each other at junctions, the junctions of the mesh structure containing parts which are thicker than the strands, stand proud of the strands, and contain plastics material which is unoriented or of low orientation. The plastics material of the mesh structure envelopes some fibres or filaments of the fabric and thereby bonds the mesh structure to the fabric. The invention also relates to the method of producing the mesh structure/fabric laminate, and further relates to a method of using a mesh structure/fabric laminate comprising fabric bonded to a mesh structure.

The laminate of the invention is applicable to paved surfaces in general, but the invention is particularly useful when reinforcing asphalt. "Asphalt" is used herein in the general sense to refer to an aggregate having a hydrocarbon-type binder, which may be for instance natural asphalt or bitumen; the asphalt is normally laid hot and sets on cooling, though cold-mix asphalts can be used. The asphalt can be used on for instance a road or runway, normal practice being to lay an asphalt base course and to place an asphalt wearing course over the base or binder course. The ground is the surface to be covered with a paving layer, and can be any suitable surface, and can eventually be within a multi-layer construction, eg within the thickness of a full depth asphalt pavement or road. The ground can be eg the surface of a lower layer of asphalt or concrete to be covered with an upper layer of asphalt, or the base or binder course, or the lower part of an old wearing course when refurbishing, or a concrete or lean-mix concrete base or sub-base. Thus the invention can be applied when making a new construction or when refurbishing, for instance, after part or whole removal of the old wearing course, or even directly onto an old wearing course.

In recent years, mesh structures (which are also termed grids) have been incorporated in order to improve the paved surface. The mesh structure can control rutting and reflective cracking (cracking which is initiated in or below the base course). The mesh structure itself is laid onto the ground and is tensioned, the tension being maintained throughout the laying process. Modern practice is to spray the mesh structure and the ground with a bituminous emulsion or solvent-based bitumen known as "cut-back", and a layer of small stone chippings is then spread over the surface, becoming adhered to the bitumen. A conventional paving operation can then be carried out to apply a layer of hot asphalt onto the layer of chippings without the tracks or wheels of the asphalt laying machine (called a paviour) coming into contact with the grid. The layer of hot asphalt becomes integrated with the layer of chippings and bitumen, the whole composite being bonded to the road surface through the bitumen. Vertical loads on the new road surface are resolved into horizontal forces, which are then restrained by the grid structure into which the chippings and aggregate from the asphalt layer interlock.

Whilst this procedure is effective, it is complex and relatively expensive because of the number of individual operations necessary. The coating of the ground and mesh structure with bitumen and then spreading a chip coat, is expensive and time consuming.

The mesh structure itself is preferably formed of plastics material, high-strength molecularly oriented polymer structures being used, for instance, a biaxially-oriented mesh in accordance with US 4 374 798. However, other materials such as glass fibre grids, woven or knitted polyester meshes or metal grids may be used.

A commercially-acceptable method is desirable for positioning the mesh structure in the asphalt. In one experimental procedure, the mesh structure was laid on top of the base or binder course and the wearing course placed on top of the mesh structure using a conventional machine; the mesh structure was a biaxially-orientated mesh structure in accordance with US 4 374 798. It was found that if the mesh structure was merely laid on the surface of the base or binder course, the tractive forces and weight of the asphalt laying machine caused the mesh structure to stretch and buckle as the wearing course was laid, resulting in the mesh structure being imprecisely positioned and causing subsequent rucking of the mesh structure and splitting of the asphalt. The mesh structure moves forward in front of the wheels or track of the machine, forming a type of bow wave. This makes it impossible to determine the position of the mesh structure within the wearing course.

US 4 374 798 discloses a laminate of the type referred to above. For laminating, the mesh structure is provided with a special layer on one or both faces, which will be all over the respective face or faces of mesh structure, the implication being that the fabric would be adhered to the whole of the respective face. There is a reference in US 4 374 798 to using the mesh structure beneath a road surface; however, this is in connection with retaining or stabilising particulate material, especially soil etc, and the mesh structure is beneath the road surface and not reinforcing the road surface itself.

NL-A-68 07089 discloses a method of mesh structure/fabric laminate as referred to above using a network of fibrous strands below an asphalt wearing course. The network is laminated on one or both sides to a low-melting film and is placed on a base or binder course. Hot asphalt is placed on the laminate so that the film melts and provides good adhesion between the fibre strands and the base or binder course, and also between the fibre strands. However, the fibre strands do not provide any interlock with the asphalt wearing course and do not provide any effective reinforcement. A problem derived from NL-A-68 07089 is to provide an effective reinforcement for a paved surface.

DE-G-7320271 discloses the production of a board by stitching or adhering a polyester mesh structure to a non-woven polyamide fabric, and then applying a layer of bitumen in order to partly melt the fabric.

A leaflet entitled "Geotextil Bitutex Synteen", published by Synteen Geweb Technik GmbH, discloses a mesh or grid, the grid being impregnated so as to have good adhesion to bituminous materials and being usable in road coverings.

GB-A-1 209 523, generally equivalent to US 3 697 347, discloses reinforcing a thin, lightweight, non-woven web by heat laminating the web with a thermoplastic net which initially has thickened portions or junctions connected by elongated, molecularly-oriented strands which are thinner than the thickened junctions. On heating, the net melts, the molten junctions give coherence to the non-woven fibres of the fabric, and the strands part and deorient to form loose fibrils.

### The Invention

According to one aspect of the invention, the mesh structure is a grid and the oriented strands of the grid are not substantially bonded to the fabric, the lamination being achieved by the bonding of said thicker parts to the fabric.

According to a second aspect of the invention, the laminate is used by positioning the laminate such that the mesh structure is above the fabric, adhering the fabric to the ground, and subsequently placing aggregate on the laminate, pieces of the aggregate engaging in meshes of the mesh structure and interlocking with strands of the mesh structure when the aggregate is placed on the laminate, to thereby provide a reinforced paved surface.

The laminate of the invention can thus be used to reinforce a paved surface. The fabric provides a good medium for adhering or bonding to the ground, but does not prevent interlock between pieces of aggregate and the mesh structure, which is important for effective reinforcement by the mesh structure. No significant plane of weakness is formed. If, as is preferred, the mesh structure comprises strands and parts which are thicker than the strands, which parts are secured to the fabric to form the laminate, the strands can stand slightly proud of the fabric, which improves interlock. The reinforcing method of the invention makes it unnecessary to tension the mesh structure as it is being laid. Nonetheless, as the laminate is properly retained by adhesion to the ground, the mesh structure does not stretch and does not form bow waves as the asphalt laying machine advances.

Using the laminate or method of the invention, the normal paving operation can be carried out without the necessity for the application of the chippings to the mesh structure, though some time may be required to allow the adhesive to cure.

The laminate may be adhered to the ground by using a liquid which is sprayed or spread on the ground before laying laminate, and a second application of liquid may be made to the top of the laminate after laying the laminate on the ground. The fabric not only absorbs the liquid, but allows the liquid to pass through the fabric so forming a bond as the liquid cures or sets, and adhering the fabric to the ground. The fabric can be secured firmly to the adhesive by brushing it onto the ground with push brooms or automatic equipment having the same action. Some time must be allowed for curing or setting before proper adhesion is achieved.

The fabric can be of any suitable type, but will have a fibrous or filamentary structure suitable for mechanical interlock with the cured or set adhesive. It should be sufficiently coherent to provide a good bond between the mesh structure and the ground, though the presence of the adhesive in the intesticies of the fabric can achieve this. The preferred fabrics are needled continuous filaments or staple fibres or spun bonded fabrics, but woven or knitted fabrics could be used.

The fabric will normally be formed of a plastics material such as polyester. Suitable geotextile fabrics are known.

Any suitable adhesive can be used, and adhesion may be due for instance to a chemical change, solidification on cooling or solidification as a solvent evaporates. The adhesive could be an aqueous based bituminous emulsion or a solvent based bitumen known as "cut-back" or "pure bitumen". The rate of appliation of the adhesive will depend on the weight of fabric being used and also the standard of finish on the ground on which the fabric is laid, but sufficient needs to be applied to ensure an adequate bond to the ground.

The unit weight of the fabric could be from 80 gms/m² to 250 gms/m², but preferably about 130 gms/m².

The mesh structure can be made from any suitable material by any suitable method, but is preferably made from polypropylene or polyester, and is preferably made by the method described in US 4 374 798. The mesh pitch could be from 30 mm to 100 mm, but preferably is from 40 mm to 75 mm. The weight of the grid structure could be from 150 gms/m² to 400 gms/m² but is preferably about 240 gms/m².

The size of aggregate included in the surface layer will depend on the purpose to which the surface is to be put, but will range from 3 mm to 40 mm as single sizes or in a specified grading range.

The particular laminate of the invention is especially useful in the reinforcing method of the invention - as explained above, the strands can stand slightly proud of the fabric. The plastics material of the thicker parts envelopes some of the fibres or filaments of the fabric, and thus forms a mechanical bond between the mesh structure and the fabric. Provided this is carried out properly and provided the correct mesh structures are used, melting the surfaces of the thicker parts does not weaken the mesh structure significantly.

However, other methods of laminating are possible, such as flame or hot melt adhesives bonding, but it is preferred to avoid any shrinking of oriented strands or adherence of the fabric to strands - thus the flame or the hot melt adhesives are preferably not applied excessively or at all to the strands. In general, whatever the lamination procedure, the strands should not substantially shrink during the bonding to form the lamination.

The mesh structures are preferably such as to have pronounced nodules of unorientated or low-orientation plastics material in the junctions, and suitable mesh structures can be made in accordance with US 4 374 798.

### Preferred Embodiments

The invention will be further described, by way of example, with reference to the accompanying drawings, which:-
Figure 1 is vertical section through the paved surface of a road; and
Figure 2 is schematic view showing the formation of a laminate in accordance with the invention.

### Figure 1

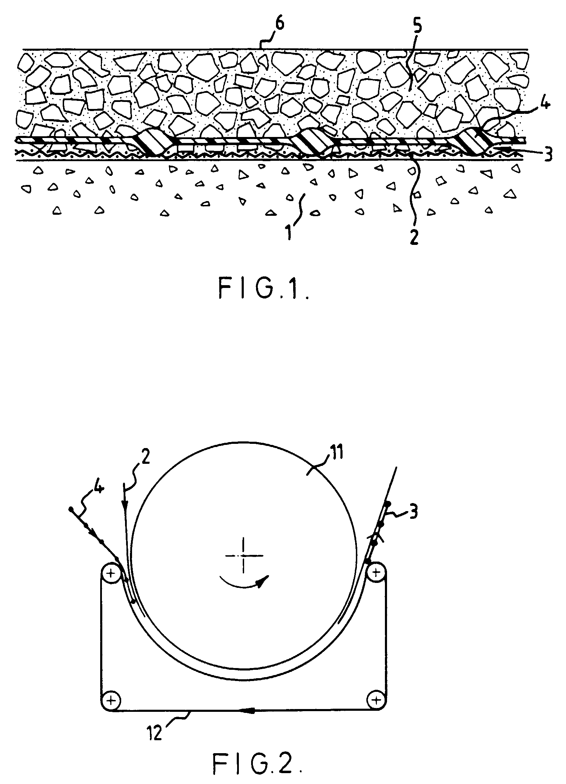

Figure 1 shows a road base 1 which forms the ground to which has been adhered the fabric 2 of a mesh structure/fabric laminate 3 which includes the mesh structure 4. The fabric 2 is lowermost, and has been adhered to the road base 1 in any suitable manner, as discussed above. Aggregate 5 has been placed on the laminate 3, and the pieces of the aggregate 5 pass into the meshes of the mesh structure 4 and interlock with the strands of the mesh structure 4. The aggregate 5 has been subjected to pressure in order to consolidate it, forming a flat road surface 6. Though the strands of the mesh structure 4 may be somewhat pressed down, it is found that some of them stand slightly proud of the fabric 2 and interlock with the pieces of the aggregate 5.

### Figure 2

Figure 2 shows a known laminating machine having a heated roll 11 whose lower half is wrapped by a silicone rubber belt 12. A fabric 2 and a plastics material mesh structure 4 are fed between the roll 11 and belt 12 so that the roll 11 heats the high points or nodules (ie the thicker parts) of the mesh structure 4 through the fabric 2 and laminates them together to form the laminate 3.

By melting only the surface of nodules of the mesh structure 4 and pressing the fabric 2 onto the nodules, the molten plastics material penetrates the fabric 2 and produces a mechanical bond. Due to the arrangement, the heated roll 11 has little effect on the oriented strands of the mesh structure 4.

### Example

The machine of Figure 2 is used to make a laminate.

### Mesh structure:

The mesh structure is in accordance with Figure 21 of US 4 374 798. The mesh structure is a biaxially-oriented mesh structure having rectangular meshes, and formed by oriented strands connected together at junctions. Each junction has a thick unoriented or low-oriented nodule in its centre, surrounded by thinner, more oriented zones. The nodules are much thicker than the strands.

The mesh structure is made of polypropylene, which during manufacture is heat set and thus made resistant to reversion (shrinkage) at asphalt laying temperatures.

| | |
|---|---|
| Grid mesh pitch | 70 mm x 50 mm |
| Grid unit weight | 240 gms/m² |
| Grid thickness at nodules | 4.4 mm |
| Grid width | 4.0 mtrs |

| Fabric: | |
|---|---|
| Raw material | polyester |
| Fabric constructions | needled continuous filaments |
| Fabric weight | 130 gms/m² |
| Fabric width | 4.0 m |

The laminate was used as described in relation to Figure 1 to form a road surface using a conventional asphalt paviours to lay the asphalt. The adhesive was spread on the ground before placing the laminate in position after which further adhesive was applied on top of the fabric. The adhesive was a bituminous aqueous-based emulsion, sprayed on at a rate of 1 1/2 to 2 litres/m² of ground; a lower rate, eg 0.8 to 1 litres/m² can be sprayed on if push brooms are used to brush the fabric down onto the adhesive surface or automated lay-down equipment used. The asphalt was a rolled asphalt wearing course (Design Mix), laid as follows:

| | |
|---|---|
| Thickness of layer | 50 mm |
| Aggregate size | 20 mm maximum (graded) |
| Laying temperature | 140° - 150° C |

The present invention has been described above purely by way of example, and modifications can be made within the invention.

### List of Prior Art Considered

DE-A-1 459 734 (Dunkel et al/Licentia)
DE-A-1 759 133 (Siegmeier)
DE-A-2 400 769 (Robinski/Buefing & Fasch)
DE-A-3 317 628 (Lahme/Kalkspatgruben)
DE-G-7320271.8 (Stehli & Co GmbH)
FR-A-2 500 025 (Renner et al/Servisport)
GB 914 489 (Seymour et al/Smith & Nephew)
GB 1 029 105 (Rex Chainbelt Inc)
GB 1 209 523 (Lehmann/Hercules)
GB 1 332 341 (Lindskog/System Research Inc)
GB-A-2 002 686 (McKeand et al/ICI)
GB-B-2 035 191 (Mercer/PLG Research Limited) - "Biax Square Mesh"
GB-A-2 096 531 (Mercer/PLG Research Limited) - "Octagonal"
NL-A-68 07089 (Lievense)
NL-A-70 07249 (Akzo)
US 2 919 467 (Mercer/Plastic Textile Accessories) - Case 1
US 3 361 043 (Beeson/Jaeger)
US 3 386 876 (Wyckoff/Avison)
US 3 566 758 (Perkins)
US 3 678 816 (Hudis/Rex Chain belt)
US 3 697 347 (Lehmann/Hercules)
US 3 913 854 (McClure/Phillips)
US 4 302 495 (Marra/Hercules Inc.)
US 4 362 780 (Marzocchi/Owens-Corning)
US 4 374 798 (Mercer/PLG Research Ltd.) - Tensar Method
US 4,540,311 (Leach/Barlington Industries, Inc.)
US 4 574 100 (Mercer/P.L.G. Research)) - Octagonal
US 4 756 946 (Mercer/P.L.G. Research) - Tensar product
Brochure entitled "Tensar Grid Reinforced Asphalt".
Information bulletin entitled "Installation procedure for continuous reinforcement of asphalt using "Tensar" grids", May 1986, published by Netlon Limited.
"Civil Engineering" December 1977, Pages 59, 61, 63 and 65.
Ingold Article, in "Ground Engineering", April 1984, pages 29-32.
Kennepohl et al article entitled "Construction of Tensar asphalt pavements", in "Polymer grid reinforcement", pages 171 to 175, published by Thomas Telford Ltd, London, 1985, the proceedings of a conference held in London on 22 and 23 March, 1984.
Brown et al article entitled "Tensar reinforcement of asphalt: laboratory studies", in "Polymer grid reinforcement", pages 158 to 165, published by Thomas Telford Ltd, London, 1985, the proceedings of a conference held in London on 22 and 23 March, 1984.
Information Bulletin "Tensar R Installation Procedure for Continuous Reinforcement of Asphalt using Tensar Grids", published by Netlon Ltd.
Milligan et al article entitled "Model testing of geogrids under an aggregate layer on soft ground", in "Polymer grid reinforcement", pages 128 to 138, published by Thomas Telford Ltd, London, 1985, the proceedings of a conference held in London on 22 and 23 March, 1984.
Draft International Standard ISO/DIS 10318.
Certificate of the Staatliches Prüfamt für Textilstoffe, Reutlingen, for Synteen-Armierungsgitter Typ I/15, dated 6 August 1979.
Certificate of the Staatliches Prüfamt für Textilstoffe, Reutlingen, for Synteen-Armierungsgitter Typ 2/20, dated 6 August, 1979.
Synteen-Bitutex Leaflet, communicated to EPO with Dr Weiss letter of 28 June, 1995.
Synteen-Armierungsgitter, Types 1/15 and 2/20, communicated to EPO with Dr Weiss letter of 28 June, 1995.

## Claims

1. A mesh structure/fabric laminate (3) comprising a fabric (2) bonded to a plastics material mesh structure (4) having oriented strands connected to each other at junctions, the junctions of the mesh structure (4) comprising parts which are thicker than the strands, stand proud of the strands, and contain plastics material which is unoriented or of low orientation, the plastics material of the mesh structure (4) enveloping some fibres or filaments of the fabric (2) and thereby bonding the mesh structure (4) to the fabric, characterised in that the mesh structure is a grid (4), and in that the said thicker parts are bonded to the fabric (2) without the oriented strands of the grid (4) being substantially bonded to the fabric (2).

2. The laminate (3) of Claim 1, wherein the grid (4) is a biaxially-orientated mesh structure having substantially square or rectangular meshes.

3. The laminate (3) of Claim 1 or 2, wherein the junctions comprise thick nodules forming said thicker parts, surrounded by thinner and more-orientated zones.

4. The laminate (3) of any of the preceding Claims, wherein the grid has a weight of at least 150 gms/m².

5. A method of producing a mesh structure/fabric laminate (3), comprising providing a plastics material mesh structure (4) having oriented strands connected to each other at junctions comprising parts which are substantially thicker than the strands, stand proud of the strands, and contain plastics material which is unoriented or of low orientation, melting a surface of said mesh structure (4), and pressing a fabric (2) onto the mesh structure (4) so that the plastics material of the mesh structure (4) envelopes some fibres or filaments of the fabric (2) and thereby bonds the mesh structure (4) to the fabric (2), characterised in that the mesh structure (4) is a grid, and in that said thicker parts are bonded to the fabric (2) without substantially bonding the oriented strands of the grid (4) to the fabric (2).

6. The method of Claim 5, wherein the grid (4) is a biaxially-orientated mesh structure having substantially square or rectangular meshes.

7. The method of Claim 5 or 6, wherein the junctions comprise thick nodules forming said parts, surrounded by thinner and more-orientated zones.

8. The method of any of Claims 5 to 7, wherein the grid (4) has a weight of at least 150 gms/m².

9. A method of reinforcing a paved surface, comprising positioning on the ground (1) the laminate (3) of any of Claims 1 to 4 with the fabric (2) lowermost, adhering the fabric (2) to the ground (1), and placing aggregate (5) on the grid (4).

10. A method of using a mesh structure/fabric laminate (3) comprising a fabric (2) bonded to the mesh structure (4), characterised in that the laminate (3) is positioned such that the mesh structure (4) is above the fabric (2), the fabric (2) is adhered to the ground (1) and subsequently aggregate (5) is placed on the laminate, pieces of the aggregate (5) engaging in meshes of the mesh structure (4) and interlocking with strands of the mesh structure (4) when the aggregate (5) is placed on the laminate, to thereby provide a reinforced paved surface.

11. The method of Claim 10, wherein the mesh structure (4) comprises parts which are thicker than the strands, which parts are secured to the fabric (2) to form the laminate (3).

12. The method of Claim 10 or 11, wherein the mesh structure (4) is an integral plastics material mesh structure having oriented strands connected to each other at junctions.

13. The method of any of Claims 10 to 12, wherein the mesh structure is a grid (4) having a weight of at least 150 gms/m².

14. The method of any of Claims 10 to 13, wherein the strands of the mesh structure (4) are not substantially bonded to the fabric (2).

15. The method of any of Claims 9 to 14, wherein the laminate (3) is adhered to the ground (1) by applying adhesive to the ground (1) and laying the laminate (3) on the ground (1), and subsequently applying further adhesive to the upper face of the fabric (2) of the laminate (3) prior to placing aggregate (5) on the laminate (3).

16. The method of Claim 15, wherein the fabric (2) absorbs liquid adhesive so that the adhesive is present in interstices of the fabric (2), and the fabric (2) also allows the adhesive to pass therethrough.

17. The method of any of Claims 9 to 16, wherein the laminate (3) is adhered to the ground (1) using a bituminous liquid.

## Patentansprüche

1. Maschenstruktur/Gewebelaminat (3) die ein an eine Maschenstruktur aus Kunststoffmaterial (4) gebundenes Gewebe (2) umfassen, welche orientierte und an Verzweigungen miteinander gekoppelte Litzen enthält, wobei die Verzweigungen der Maschenstruktur (4) Teile einschließen, welche dicker als die Litzen sind, welche aus den Litzen herausragen und welche Kunststoffmaterial das nicht orientiert oder wenig orientiert ist enthalten, wobei das Kunststoffmaterial der Maschenstruktur (4) einige Fasern oder Filamente des Gewebes (2) einhüllt und dadurch die Maschenstruktur (4) mit dem Gewebe verbindet, dadurch gekennzeichnet, daß die Maschenstruktur ein Raster (4) ist und daß die genannten dickeren Teile an das Gewebe (2) gebunden sind, ohne daß die orientierten Litzen des Rasters (4) wesentlich mit dem Gewebe (2) verbunden sind.

2. Laminat (3) gemäß Anspruch 1, in welchem das Raster (4) eine biaxial orientierte Maschenstruktur ist, welche im wesentlichen quadratische oder rechteckige Maschen aufweist.

3. Laminat (3) gemäß Anspruch 1 oder 2, in welchem die Verzweigungen dicke Knollen umfassen, welche die genannten dickeren Teile, die von dünneren und stärker orientierten Zonen umgeben sind, bilden.

4. Laminat (3) gemäß irgendeinem der vorhergehenden Ansprüche, in welchem das Raster ein Gewicht von mindestens 150 g/m² hat.

5. Verfahren zur Herstellung einer Maschenstruktur/eines Gewebelaminats (3), welches in sich vereinigt; eine Bereitstellung einer aus Kunststoffmaterial bestehenden Maschenstruktur (2) die orientierte und an Verzweigungen miteinander gekoppelte Litzen enthält, wobei die Verzweigungen Teile aufweisen welche wesentlich dicker als die Litzen sind, aus den Litzen herausragen und Kunststoffmaterial das nicht orientiert oder wenig orientiert ist enthalten; ein Schmelzen einer Oberfläche der genannten Maschenstruktur (4) sowie ein Pressen eines Gewebes (2) auf die Maschenstruktur (4), so daß das Kunststoffmaterial der Maschenstruktur (4) einige Fasern oder Filamente des Gewebes (2) einhüllt und dadurch die Maschenstruktur (4) mit dem Gewebe (2) verbindet, dadurch gekennzeichnet, daß die Maschenstruktur ein Raster (4) ist und daß die genannten dickeren Teile an das Gewebe (2) gebunden sind, ohne daß sie die orientierten Litzen des Rasters (4) wesentlich mit dem Gewebe (2) verbinden.

6. Verfahren gemäß Anspruch (5), in welchem das Raster (4) eine biaxial orientierte Maschenstruktur ist, welche im wesentlichen quadratische oder rechteckige Maschen aufweist.

7. Verfahren gemäß Anspruch 5 oder 6, in welchem die Verzweigungen dicke Knollen einschließen, welche die genannten Teile, die von dünneren und stärker orientierten Zonen umgeben sind, bilden.

8. Verfahren gemäß irgendeinem der Ansprüche 5 bis 7, in welchem das Raster (4) ein Gewicht von mindestens 150 g/m² hat.

9. Verfahren zur Bewehrung einer gepflasterten Oberfläche, welches ein Anordnen des Laminats (3) gemäß irgendeinem der Ansprüche 1 bis 4 auf dem Grund (1), wobei das Gewebe (2) ganz unten liegt, ein Kleben des Gewebes (2) an den Grund (1) sowie ein Aufschütten des Zuschlagstoffes (5) auf das Raster (4) einschließt.

10. Verfahren zum Gebrauch einer Maschenstruktur/eines Gewebelaminats (3) das ein mit der Maschenstruktur (4) verbundenes Gewebe (2) aufweist, dadurch gekennzeichnet, daß das Gewebe (3) so angeordnet ist, daß die Maschenstruktur (4) über dem Gewebe (2) liegt, das Gewebe (2) an den Grund (1) geklebt wird und anschließend Zuschlagstoff (5) auf das Laminat aufgeschüttet wird, wobei sich Teile des Zuschlagstoffes (5) mit den Maschen der Maschenstruktur (4) vereinen und sich mit Litzen der Maschenstruktur (4) gegenseitig durchdringen wenn der Zuschlagstoff (5) auf das Laminat aufgeschüttet wird, um dadurch eine bewehrte gepflasterte Oberfläche zu beschaffen.

11. Verfahren gemäß Anspruch 10, in welchem die Maschenstruktur (4) Teile einschließt, welche dicker als die Litzen sind, wobei diese Teile an dem Gewebe (2) festgehalten werden, um das Laminat (3) zu bilden.

12. Verfahren gemäß Anspruch 10 oder 11, in welchem die Maschenstruktur (4) eine integrale Maschenstruktur aus Kunststoffmaterial darstellt, welche orientierte und an Verzweigungen miteinander verbundene Litzen besitzt.

13. Verfahren gemäß irgendeinem der Ansprüche 10 bis 12, in welchem die Maschenstruktur ein Raster (4) ist welches ein Gewicht von mindestens 150 g/m² hat.

14. Verfahren nach irgendeinem der Ansprüche 10 bis 13, in welchem die Litzen der Maschenstruktur (4) nicht wesentlich mit dem Gewebe (2) verbunden sind.

15. Verfahren gemäß irgendeinem der Ansprüche 9 bis 14, in welchem das Laminat (3) an den Grund (1) geklebt wird indem Klebstoff auf den Grund (1) aufgetragen wird und das Laminat (3) auf den Grund (1) ausgebreitet wird, und anschließend weiterer Klebstoff auf die obere Seite des Gewebes (2) des Laminats (3) aufgetragen wird, bevor der Zuschlagstoff (5) auf das Laminat (3) geschüttet wird.

16. Verfahren gemäß Anspruch 15, in welchem das Gewebe (2) flüssigen Klebstoff absorbiert, so daß der Klebstoff in den Zwischenräumen des Gewebes (2) anwesend ist und das Gewebe (2) es dem Klebstoff ebenfalls erlaubt durch dieselben hindurchzudringen.

17. Verfahren gemäß irgendeinem der Ansprüche 9 bis 16, in welchem das Laminat (3) unter Einsatz einer bituminösen Flüssigkeit auf den Grund (1) geklebt wird.

## Revendications

1. Structure à mailles/lamifié de tissu (3) comprenant un tissu (2) combiné à une structure à mailles en matière plastique (4) ayant des brins orientés connectés les uns aux autres aux jonctions, les jonctions de la structure à mailles (4) comprenant des parties qui sont plus épaisses que les brins, qui font saillie par rapport aux brins et qui contiennent de la matière plastique non orientée ou à faible orientation, la matière plastique de la structure à mailles (4) enveloppant quelques fibres ou filaments du tissu (2) et combinant de cette façon la structure à mailles (4) au tissu, caractérisés en ce que la structure à mailles est un treillis (4) et en ce que lesdites parties plus épaisses sont combinées au tissu (2) sans que les brins orientés du treillis (4) soient substantiellement liés au tissu (2).

2. Lamifié (3) suivant la revendication 1, dans lequel le treillis (4) est une structure à mailles à orientation biaxe ayant des mailles substantiellement carrées ou rectangulaires.

3. Lamifié (3) suivant la revendication 1 ou 2, dans lequel les jonctions comprennent des nodules épais formant lesdites parties plus épaisses, entourées par des zones plus minces et à orientation plus élevée.

4. Lamifié (3) suivant l'une quelconque des revendications précédentes, dans lequel le treillis a un poids d'au moins 150 g/m².

5. Procédé de fabrication d'une structure à mailles/d'un lamifié de tissu (3), comportant la fourniture d'une structure à mailles en matière plastique (4) ayant des brins orientés connectés les uns aux autres aux jonctions, qui comprennent des parties qui sont substantiellement plus épaisses que les brins, qui font saillie par rapport aux brins et qui contiennent de la matière plastique non orientée ou à faible orientation, la fusion d'une surface de ladite structure à mailles (4) ainsi que le pressage d'un tissu (2) sur la structure à mailles (4) de sorte que la matière plastique de la structure à mailles (4) enveloppe quelques fibres ou filaments du tissu (2) et combine de cette façon la structure à mailles (4) au tissu (2), caractérisé en ce que la structure à mailles (4) est un treillis et en ce que lesdites parties plus épaisses sont combinées au tissu (2) sans que les brins orientés du treillis (4) soient substantiellement connectés au tissu (2)

6. Procédé suivant la revendication 5, dans lequel le treillis (4) est une structure à mailles à orientation biaxe ayant des mailles substantiellement carrées ou rectangulaires.

7. Procédé suivant la revendication 5 ou 6, dans lequel les jonctions comprennent des nodules épais formant lesdites parties, entourées par des zones plus minces et à orientation plus élevée.

8. Procédé suivant l'une quelconque des revendications 5 à 7, dans lequel le treillis (4) a un poids d'au moins 150 g/m².

9. Procédé pour le renforcement d'une surface pavée, comprenant la mise en place sur le sol (1) du lamifié (3) suivant l'une quelconque des revendications 1 à 4 avec le tissu (2) se trouvant en bas, le collage du tissu (2) au sol (1) et la pose de l'agrégat (5) sur le treillis (4).

10. Procédé d'utilisation d'une structure à mailles/d'un lamifié de tissu (3) comprenant un tissu (2) combiné à la structure à mailles (4), caractérisé en ce que le lamifié (3) est mis en place de telle manière que la structure à mailles (4) se trouve au-dessus du tissu (2), que le tissu (2) est collé au sol (1) et que par la suite l'agrégat (5) est placé sur le lamifié, des morceaux de l'agrégat (5) s'engageant dans les mailles de la structure à mailles (4) et s'enchevêtrant avec les brins de la structure à mailles (4) lorsque l'agrégat (5) est placé sur le lamifié, pour fournir de cette façon une surface pavée renforcée.

11. Procédé suivant la revendication 10, dans lequel la structure à mailles (4) comprend des parties qui sont plus épaisses que les brins, ces parties étant accrochées au tissu (2) pour former le lamifié (3).

12. Procédé suivant la revendication 10 ou 11, dans lequel la structure à mailles (4) est une structure à mailles en matière plastique intégrale ayant des brins orientés connectés les uns aux autres aux jonctions.

13. Procédé suivant l'une quelconque des revendications 10 à 12, dans lequel la structure à mailles est un treillis (4) ayant un poids d'au moins 150 g/m².

14. Procédé suivant l'une quelconque des revendications 10 à 13, dans lequel les brins de la structure à mailles (4) ne sont pas substantiellement connectés au tissu (2).

15. Procédé suivant l'une quelconque des revendications 9 à 14, dans lequel le lamifié (3) est collé au sol (1) en répandant de l'adhésif sur le sol (1) et en posant le lamifié (3) sur le sol (1) ainsi qu'en appliquant par la suite de l'adhésif supplémentaire à la face supérieure du tissu (2) du lamifié (3) avant de placer l'agrégat (5) sur le lamifié (3).

16. Procédé suivant la revendication 15, dans lequel le tissu (2) absorbe de l'adhésif liquide, de sorte que l'adhésif est présent dans les interstices du tissu (2) et le tissu (2) permet également à l'adhésif de passer à travers ceux-ci.

17. Procédé suivant l'une quelconque des revendications 6 à 16, dans lequel le lamifié (3) est collé au sol (1) en utilisant un liquide bitumineux.
